(19) Europäisches Patentamt
European Patent Office
Office européen des brevets

(11) Veröffentlichungsnummer: **0 183 143**
**A2**

# (12) EUROPÄISCHE PATENTANMELDUNG

(21) Anmeldenummer: **85114517.7**

(22) Anmeldetag: **15.11.85**

(51) Int. Cl.[4]: **C 08 G 63/68**
C 08 G 63/64

(30) Priorität: **27.11.84 DE 3443090**

(43) Veröffentlichungstag der Anmeldung:
**04.06.86 Patentblatt 86/23**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Stix, Wolfgang, Dr.**
**Freudenbergstrasse 56b**
**D-6901 Neckarsteinach(DE)**

**Der weitere Erfinder hat auf seine Nennung verzichtet**

## (54) Aromatische Polyester mit Dimethylmaleinimid-Endgruppen, ihre Herstellung und Verwendung.

(57) Gegenstand der vorliegenden Erfindung sind aromatische Polyester(carbonate) mit Endgruppen der Formel (Ib)

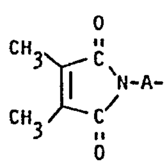
(Ib)

gegebenenfalls im Gemisch mit bekannten aromatischen Polyester(carbonate)n, ihre Herstellung nach dem Phasengrenzflächenverfahren oder in homogener Lösung sowie ihre Modifizierung durch Bestrahlen.

EP 0 183 143 A2

BAYER AKTIENGESELLSCHAFT 5090 Leverkusen, Bayerwerk
Konzernverwaltung RP
Patentabteilung PS/Kü-c

# Aromatische Polyester mit Dimethylmaleinimid-Endgruppen, ihre Herstellung und Verwendung

Gegenstand der vorliegenden Erfindung ist ein Verfahren zur Herstellung von aromatischen Polyestern mit Dimethylmaleinimid-Endgruppen mit mittleren Molekulargewichten $\bar{M}w$ (Gewichtsmittel, ermittelt durch Lichtstreuung) zwischen 3000 und 150 000, vorzugsweise zwischen 10 000 und 100 000, besonders bevorzugt zwischen 20 000 und 80 000, gegebenenfalls im Gemisch mit bekannten aromatischen Polyestern mit $\bar{M}w$ (Gewichtsmittel, ermittelt durch Lichtstreuung) zwischen 3000 und 150 000, vorzugsweise zwischen 10 000 und 100 000, besonders bevorzugt zwischen 20 000 und 80 000, aus Diphenolen, 0,5 bis 40 Mol-%, vorzugsweise 1 bis 20 Mol-%, besonders bevorzugt 1,5 bis 10 Mol-%, bezogen auf Mole Diphenole, Kettenabbrechern, Terephthalsäuredichloriden, Isophthalsäuredichloriden, wobei das Verhältnis der aromatischen Säurechloride zwischen 7:3 und 3:7 liegt, und gegebenenfalls Phosgen in Mengen bis maximal 100 Mol-%, bezogen auf Mole der eingesetzten aromatischen Disäurechloride, nach den bekannten Methoden des Phasengrenzflächenverfahrens

oder des Verfahrens in homogener Lösung, das dadurch gekennzeichnet ist, daß man Kettenabbrecher der Formel (I)

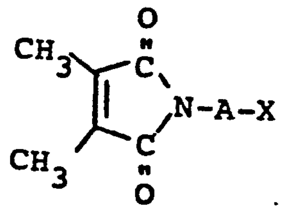

(I),

gegebenenfalls in Kombination mit maximal 3fachen, vorzugsweise maximal gleichen Molmengen, bezogen auf Mole Kettenabbrecher (I), an anderen, bekannten Kettenabbrechern verwendet.

Im vorliegenden Zusammenhang werden unter "aromatischen Polyestern" sowohl Polykondensate verstanden, deren Polymerkette nur aus Carbonsäureesterbindungen aufgebaut ist, als auch solche, die zusätzlich Carbonatbindungen enthalten und üblicherweise als Polyestercarbonate bezeichnet werden.

In den Kettenabbrechern der Formel (I) sind die X-A-Reste X-$C_1$-$C_8$-Alkyl, X-$C_5$-$C_6$-Cycloalkyl, X-$C_7$-$C_{28}$-Aralkyl oder Reste der Formel

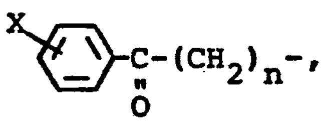

, worin "n" eine ganze Zahl von 1 bis 8 ist, und X- eine funktionelle Gruppe ist, die bei der Polyesterherstellung nach dem Zweiphasengrenzflächenverfahren oder nach dem Verfahren in homogener Phase (Pyridinverfahren) als reaktiver Teil der Kettenabbrecher der Formel (I) fungiert.

Beispielsweise kann X- $Cl-\overset{O}{\overset{\|}{C}}-$, $Br-\overset{O}{\overset{\|}{C}}-$, $HO-\overset{O}{\overset{\|}{C}}-$, $Cl-\overset{O}{\overset{\|}{C}}-O-$, $Br-\overset{O}{\overset{\|}{C}}-O-$ oder HO- sein, wobei im Falle des Zweiphasengrenzflächenverfahrens aliphatische und cycloaliphatische OH-Gruppen in reaktionsfähige und stabile Chlorkohlensäureesterendgruppen oder aromatische Carbonsäurechloridendgruppen überführt werden müssen. Vorzugsweise ist X- $Cl-\overset{O}{\overset{\|}{C}}-$, $Cl-\overset{O}{\overset{\|}{C}}-O-$ oder HO-.

In den obengenannten X-A-Resten ist Alkyl linear oder verzweigt. Beispiele für X-A-Reste sind

$X-(CH_2)_n-$, $X-\underset{CH_3}{\underset{|}{CH}}-CH_2-$, 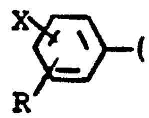$-(CH_2)_n-$ und 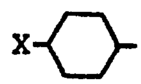 ,

worin R H oder $CH_3$ und "n" eine ganze Zahl von 1 bis 8 sind.

Die Kettenabbrecher der Formel (I) sind entweder bekannt (siehe beispielsweise DE-OS 2 626 795 oder DE-OS 2 934 578) oder nach bekannten Verfahren erhältlich aus Dimethylmaleinsäureanhydrid mit den entsprechenden primären Aminen gemäß folgender Reaktionsgleichung:

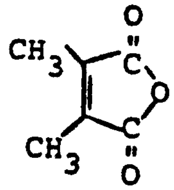 $+ H_2N-A-X$ (I) $+ H_2O$.

In den Fällen, in denen X eine Säurehalogenid- oder Halogenkohlensäureester-Gruppe ist, wird aus den entsprechenden COOH-Gruppen beziehungsweise OH-Gruppen die Umwandlung nach allgemein bekannten Verfahren durchgeführt.

Beispiele für Kettenabbrecher der Formel (I) sind:

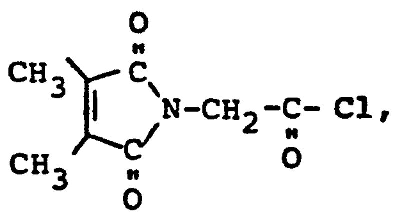

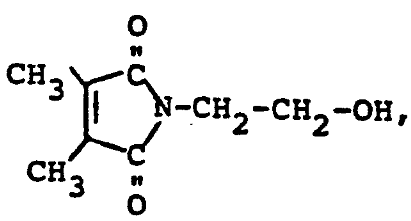

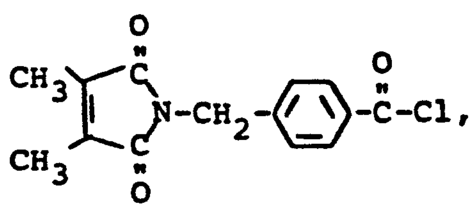

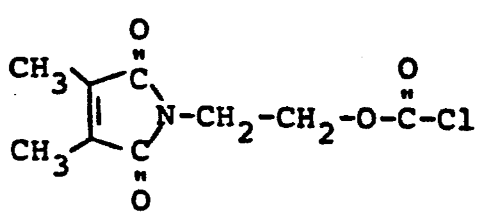 und

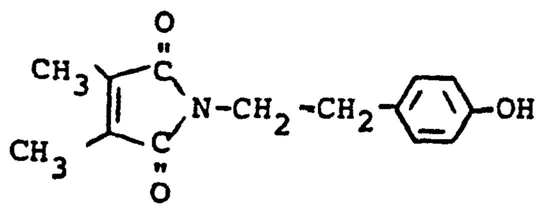

Die für das Zweiphasengrenzflächenverfahren geeigneten chlorkohlensäureesterendgruppenhaltigen Kettenabbrecher haben die Formel (Ia)

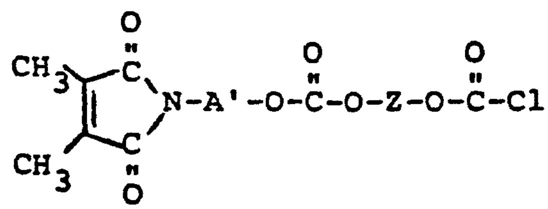

(Ia),

worin A' ein $C_2$-$C_8$-Alkylen-Rest oder $C_5$-$C_6$-Cycloalkylen-Rest ist und -O-Z-O- ein Diphenolat-Rest mit vorzugsweise 6 bis 30 C-Atomen ist.

Derartige Zwischenprodukte (Ia) sind aus den entsprechenden OH-Gruppen-haltigen Kettenabbrechern (I) mit Bishalogenkohlensäureestern von Diphenolen (III) HO-Z-OH (III) in bekannter Weise erhältlich.

Die für das Zweiphasengrenzflächenverfahren geeigneten aromatischen Carbonsäurechloridendgruppen-haltigen

Kettenabbrecher haben die Formel (Ia')

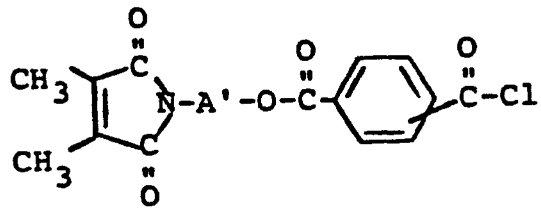 (Ia')

worin A' die in Formel (Ia) genannte Bedeutung hat.

Bekannte, bei dem erfindungsgemäßen Verfahren mitzuverwendende andere Kettenabbrecher sind beispielsweise Phenole, Carbonsäurehalogenide, oder Chlorkohlensäureester.

Beispiele für die bekannten, mitzuverwendenden Kettenabbrecher sind Phenol, p-tert.-Butylphenol, 2,6-Dimethylphenol oder p-Isooctylphenol.

Gegenstand der vorliegenden Erfindung sind außerdem die nach dem erfindungsgemäßen Verfahren erhältlichen aromatischen Polyester mit Endgruppen der Formel (Ib)

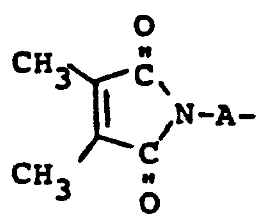 (Ib)

worin -A- die für die Formel (I) genannte Bedeutung hat, gegebenenfalls im Gemisch mit bekannten aromatischen Polyestern, mit $\bar{M}w$ zwischen 3000 und 150 000 ($\bar{M}w$ ermittelt durch Lichtstreuung), die aus dem Kettenabbruch mit den anderen, bekannten Kettenabbrechern resultieren.

In den unter "Polyester" im Sinne der vorliegenden Erfindung miterfaßten Polyestercarbonaten können bis maximal 50 Mol-% an aromatischen Dicarbonsäureresten

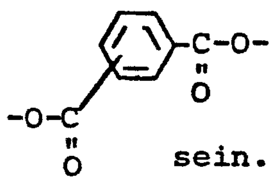 durch Carbonat-Reste $-O-\underset{\underset{O}{\|}}{C}-O-$ ersetzt sein.

Erfindungsgemäß erhältliche aromatische Polyester mit mittleren Molekulargewichten $\bar{M}w$ (Gewichtsmittel ermittelt durch Lichtstreuung) zwischen 3000 und 150 000 sind vorzugsweise solche der Formel (II)

$$E-\left[O-Z-O-D\right]_p-O-Z-O-E' \quad \text{(II)},$$

worin -O-Z-O- ein Diphenolatrest mit vorzugsweise 6 bis 30 C-Atomen ist,

-D- 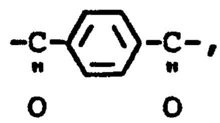 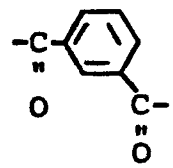 oder 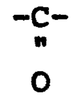 ist,

wobei bis maximal 50 % der Reste -D- 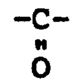 Reste sein können, und wobei das Verhältnis von 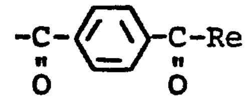-Resten zu 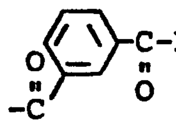-Resten zwischen 3:7 und 7:3 liegt, E und E' gleich oder verschieden sind, und wobei mindestens einer der Reste E- oder E'- einem Rest der Formel (Ic)

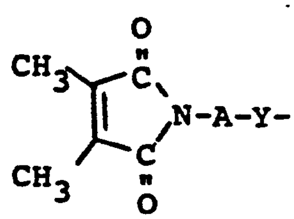

(Ic)

entspricht, worin

-A- die für Formel (I) genannte Bedeutung hat und

-Y- das Bindeglied ist, das aus der Reaktion der Kettenabbrecher der Formel (I), gegebenenfalls unter Einbeziehung eines der aromatischen Disäurechloride oder von Phosgen, resultiert, und wobei die übrigen Endgruppen E und E' aus der Reaktion mit den anderen, bekannten Kettenabbrechern, gegebenenfalls unter Einbeziehung eines der aromatischen Disäurechloride oder von Phosgen, resultieren, und wobei "p" der Polymerisationsgrad ist, der aus den Molekulargewichten $\bar{M}w$ von 3000 bis 150 000 resultiert.

Beispiele für Bindeglieder -Y- sind 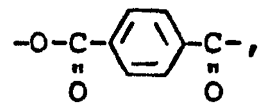,

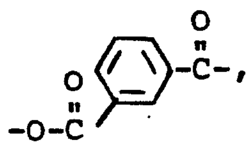, 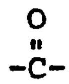 und 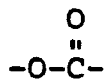.

Die erfindungsgemäß erhältlichen aromatischen Polyester beziehungsweise Polyestergemische besitzen aufgrund der Maleinimid-Endgruppen die Fähigkeit, unter dem Einfluß von elektromagnetischen Wellen ihr Molekulargewicht zu erhöhen.

Gegenüber bekannten aromatischen Polyestern (Siehe beispielsweise Monographie "Polyesters" von V.V. Korshak und S.V. Vinogradova, Pergamon Press, Oxford 1965, S. 494, 485-6 und 454-5) oder gegenüber bekannten aromatischen Polyestercarbonaten (Siehe beispielsweise C.P. Bosnyak et al. in Polymer 23 (1982) 609-12, sowie DE-AS 1 495 302, EP-OS 17 740, EP-OS 64 153 und US-Patent 4 286 083, das der DOS 2 758 030 entspricht) haben somit die erfindungsgemäß erhältlichen aromatischen Polyester beziehungsweise erfindungsgemäß erhältlichen Gemische aromatischer Polyester den Vorteil, daß sich ihr Molekulargewicht während bzw. nach der Verarbeitungsphase erhöhen läßt.

Dadurch ist der Einsatz relativ niedrigmolekularer und somit gut verarbeitbarer aromatischer Polyester ermöglicht; ferner lassen sich mit herkömmlichen Methoden höhere Molekulargewichte erzielen als bislang.

Thermoplastische, aromatische Polycarbonate mit ungesättigten Endgruppen sind bekannt (siehe Deutsche Offenlegungsschriften Nr. 2 746 139, 2 829 256, 2 843 154 und 2 842 004). Die Doppelbindungen dieser Polycarbonate können für bestimmte Reaktionen (Pfropfung, UV-Lichtvernetzung) genutzt werden.

Aus der DE-OS 3 232 391 sind Polycarbonate mit konjugierte Doppelbindungen enthaltenden Endgruppen bekannt, die, gegebenenfalls im Gemisch mit bekannten Polycarbonaten, durch Erwärmen auf Temperaturen zwischen 150°C und 400°C in Polycarbonate mit höherem Molekulargewicht überführt werden. Verzweigte Polycarbonate können dabei vernetzte, unlösliche Produkte geben.

In der DE-OS 3 307 908 (Le A 22 150) sind aromatische Polyester beschrieben, die end- oder seitenständige Reste mit zwei konjugierten Doppelbindungen enthalten, welche durch Erwärmen auf Temperaturen von 90 bis 240°C eine Erhöhung ihres Molekulargewichts erfahren und somit verbesserte Eigenschaften erhalten. Verzweigte Polyester können dabei vernetzte unlösliche Produkte ergeben.

Nachteilig bei den Polykondensaten gemäß DE-OS 3 232 391 bzw. DE-OS 3 307 908 ist, daß ihre verbesserten Eigenschaften nur durch Erwärmen zu erreichen sind, nicht jedoch durch Lichteinwirkung, wie z.B. bei atmosphärischer Bewitterung.

Aus der DE-OS 2 626 769 sind vernetzbare polymere Verbindungen bekannt. Als polymere Verbindungen sind unter anderem auch Polyester einbezogen; als vernetzende Gruppen sind Maleinimidgruppen beschrieben. Beim Belichten liefern diese Polyester hochvernetzte unlösliche Fotoresistfilme, die wegen ihrer großen Sprödigkeit für andere Anwendungen unbrauchbar sind. Demgegenüber sind die erfindungsgemäß erhältlichen Polyester nach ihrer Bestrahlung noch thermoplastisch, also in üblichen Lösungsmitteln für aromatische Polyester löslich.

Für das erfindungsgemäße Verfahren geeignete Diphenole sind solche der Formel (III)

HO-Z-OH (III)

mit vorzugsweise 6 bis 30 C-Atomen, die sowohl einkernige, als auch mehrkernige Diphenole sein können, die Heteroatome enthalten können und unter den Bedingungen der Polyesterherstellung und unter dem Einfluß von elektromagnetischen Wellen inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und α,α'-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781 und 3 148 172 und in den Deutschen Offenlegungsschriften 1 570 703 und 2 063 050 beschrieben.

Bevorzugte Diphenole sind
4,4'-Dihydroxydiphenyl, 2,2-Bis-(4-hydroxyphenyl)-propan, 2,2-Bis-(4-hydroxyphenyl)-2-methylbutan, 1,1-Bis-(4-hydroxyphenyl)-cyclohexan, α,α'-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α'-Bis-(3,5-dimethyl-4-hydroxyphenyl)-p-diisopropyl-benzol, 2,2-Bis-(3,5-dichlor-4-hydroxyphenyl)-propan und 2,2-Bis-(3,5-dibrom-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,

2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Es können auch beliebige Mischungen der vorgenannten Diphenole verwendet werden.

Die Herstellung der erfindungsgemäßen aromatischen Polyester beziehungsweise Gemische aromatischer Polyester kann entweder nach den bekannten Methoden des Phasengrenzflächenverfahrens (Siehe beispielsweise DE-OS 2 940 024 oder DE-OS 2 331 245) oder nach dem Verfahren in homogener Lösung, dem sogenannten "Pyridinverfahren" (Siehe beispielsweise US-Patent 32 34 168, DE-AS 1 595 822 oder DE-OS 2 331 245) erfolgen.

Nach dem Phasengrenzflächenverfahren wird dabei im einzelnen beispielsweise wie folgt verfahren:

a) ohne Mitverwendung von Phosgen:

Die einzusetzenden Diphenole werden in wäßriger, alkalischer Phase gelöst. Dazu werden die zur Herstellung der erfindungsgemäßen aromatischen Polyester erforderlichen Kettenabbrecher - in Substanz oder in einem organischen Lösungsmittel gelöst - zugefügt. Dann wird in Gegenwart eines nicht mit Wasser mischbaren, vorzugsweise aromatische Polyester lösenden, inerten Lösungsmittels mit einem Gemisch von Tere- und Isophtaloylchlorid umgesetzt. Die Reaktionstemperatur liegt zwischen 0° und 40°C.

b) unter Mitverwendung von Phosgen:

(Siehe beispielsweise EP-OS 0 017 740) Die einzusetzenden Diphenole werden in wäßriger, alkalischer Phase gelöst. Dazu werden die zur Herstellung der erfindungsgemäßen Poly(estercarbonate) erforderlichen Kettenabbrecher - in Substanz oder in einem organischen Lösungsmittel gelöst - zugefügt. Dann wird in Gegenwart eines nicht mit Wasser mischbaren, vorzugsweise Poly(estercarbonate) lösenden, inerten Lösungsmittels mit Tere- und Isophthaloylchlorid sowie Phosgen umgesetzt; vorzugsweise erfolgt die Zugabe der Säurechloride und des Phosgens gleichzeitig. Die Reaktionstemperatur liegt zwischen 0° und 40°C.

In beiden Fällen a) und b) kann, um den Umsatz der Polykondensation und damit auch den Polymerisationsgrad des resultierenden Produkts zu erhöhen, ein im Verlauf der Umsetzung abgesunkener pH-Wert durch Zugabe von weiterem Alkali wieder angehoben werden.

Die Zugabe der erforderlichen Kettenabbrecher, in Art und Menge wie oben angegeben, kann auch während der Polykondensation erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Geeignete organische Lösungsmittel für die Polyester (carbonate) sind beispielsweise $CH_2Cl_2$ oder Chlorbenzol.

Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Darüberhinaus müssen aliphatische und cycloaliphatische OH-Gruppen von Kettenabbrechern der Formel (I) im Falle des Zweiphasengrenzflächenverfahrens in Chlorkohlensäureendgruppen oder aromatische Carbonsäurechloridendgruppen überführt werden, beispielsweise durch Vorabreaktion mit einem Bischlorkohlensäureester eines Diphenols oder mit Iso- oder Terephthaloylchlorid.

Die Isolierung der erfindungsgemäß erhältlichen Polyester(carbonate) bzw. Polyester(carbonat)-Gemische erfolgt über die organische Phase und deren Neutralwäsche in bekannter Weise.

Die Formgebung der erfindungsgemäß erhältlichen Polyester beziehungsweise Polyestergemische kann durch thermoplastische Verarbeitungsverfahren, z.B. durch Extrusion oder Spritzgießen, sowie durch das Eindampfen von Polymerlösungen, z.B. beim Folien-Gießverfahren, erfolgen.

Das Bestrahlen der erfindungsgemäß erhältlichen Polyester beziehungsweise Polyestergemische erfolgt entweder nach der Formgebung an Formkörpern oder in Lösungen, welche anschließend zu Folien vergossen werden können. Die Bestrahlung wird durchgeführt, indem man entweder eine solche Lösung mit einer Tauchlampe bestrahlt, z.B. eine 10 %ige Polycarbonat-Lösung in Methylenchlorid mit einer Quecksilbertauchlampe, oder aber Fasern, Folien oder Formteile mit einer UV-Lampe bestrahlt.

Die resultierenden Polyester sind noch in Polyesterlösungsmitteln lösliche Thermoplaste.

Zur Beschleunigung des Molekulargewichtsaufbaues der lichtempfindlichen Polymeren können die erfindungsgemäßen Harze bekannte Sensibilisatoren in den üblichen Mengen enthalten. Beispiele für Sensibilisatoren sind Acetophenon, Benzaldehyd, Benzophenon, Diphenyl, Benzil, Fluorenon und Fluoren.

Zusätzlich sei noch vermerkt, daß der Molekulargewichtsaufbau auch mit Licht erfolgt, dessen Wellenlänge größer 400 nm ist, also im sichtbaren Bereich

liegt, so daß die Polymeren auch unter den Bedingungen der natürlichen Bewitterung ständig ihr Molekulargewicht erhöhen, wobei auch die Anwesenheit von UV-Absorbern dies nicht unterbindet.

Gegenstand der vorliegenden Erfindung ist somit auch ein Verfahren zur Modifizierung der erfindungsgemäß erhältlichen aromatischen Polyester mit Endgruppen der Formel (Ib), die UV-Absorber enthalten können, gegebenenfalls im Gemisch mit bekannten aromatischen Polyestern, das dadurch gekennzeichnet ist, daß man diese mit ultraviolettem bzw. mit sichtbarem Licht bestrahlt, beispielsweise der natürlichen Bewitterung durch Sonnenlicht aussetzt.

Den erfindungsgemäß erhältlichen Polyestern mit Endgruppen der Formel (Ib), gegebenenfalls im Gemisch mit bekannten aromatischen Polyestern, können außer oder anstelle von UV-Stabilisatoren andere, in der Polyesterchemie übliche Additive wie Gleitmittel, Nucleierungsmittel, Stabilisatoren gegen Hitze und Feuchtigkeit, Füllstoffe, Verstärkungsstoffe, Flammschutzmittel, Farbstoffe, Pigmente und/oder Schlagzähmodifikatoren vor oder während der Formgebung der Polyester in den üblichen Mengen zugesetzt werden. Hierbei können an Füllstoffen oder Verstärkungsstoffen beispielsweise 10 bis 50 Gew.-%, bezogen auf das Gesamtgewicht der Formmasse, an Glasfasern, Glaskugeln, Glimmer, Silikate, Feldspat, Quarz, $TiO_2$ oder/und Wollastonit eingesetzt werden.

In den Fällen, in denen die erfindungsgemäß erhältlichen Polyester mit Endgruppen der Formel (Ib) Füllstoffe, Verstärkungsstoffe, Pigmente oder kautschukelastische Pfropfpolymerisate als Schlagzähmodifikatoren zugesetzt enthalten, ist der Lichteinfluß vor allem bei dickeren Formkörpern reduziert; trotzdem werden auch in diesen Fällen durch oberflächlichen Molekulargewichtsaufbau die Formkörper modifiziert.

Durch das Bestrahlen von Lösungen der erfindungsgemäß erhältlichen Polyester mit Endgruppen der Formel (Ib) können Lösungen von sehr hochmolekularen Polyestern hergestellt werden, aus denen Gießfolien für Elektroisolierzwecke erhalten werden können. Bislang mußten derartige hochmolekulare Polyester wegen der sehr hohen Viskosität ihrer Lösungen in speziellen Apparaturen hergestellt werden. Jetzt kann man von Polyestern ausgehen, die in üblichen Anlagen für das Phasengrenzflächenverfahren erhalten werden, und deren Lösungen nach der üblichen Isolierung und Reinigung dann durch Bestrahlen gemäß vorliegender Erfindung in einfacher Weise weiter behandeln.

Die erfindungsgemäß erhältlichen aromatischen Polyester beziehungsweise erfindungsgemäß erhältlichen Gemische aromatischer Polyester können vor oder nach Bestrahlung als Formkörper, insbesondere als Folien, z.B. überall dort eingesetzt werden, wo sie Bestrahlung ausgesetzt sind wie dem Sonnenlicht bei der Bewitterung. Dies ist beispielsweise der Fall bei außenliegenden Teilen im Bau- und Automobilsektor, insbesondere bei dünnen Formkörpern und Folien.

## Beispiele

1. Herstellung von

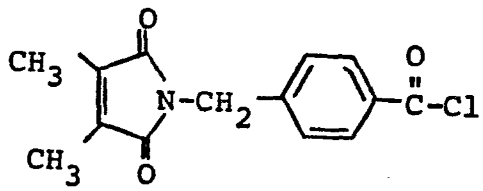

In einem Kolben mit Kühler, Rührer, Tropftrichter und Stickstoffeinleitung werden unter Stickstoff 151 g (1 Mol) 4-(Aminomethyl)-benzoesäure, 126 g (1 Mol) Dimethylmaleinsäureanhydrid und 600 ml Eisessig auf Rückflußtemperatur erwärmt und 2 Stunden gehalten. Anschließend wird der Eisessig weitgehend abdestilliert und die erhaltene Masse zweimal aus Methanol umkristallisiert.

103 g (0,4 Mol) des erhaltenen Produktes werden in einem Liter Thionylchlorid unter Eiskühlung gelöst und langsam auf Rückflußtemperatur erwärmt. Man hält die Temperatur 2 Stunden, destilliert dann das überschüssige Thionylchlorid ab, verdünnt mit 500 ml Toluol und destilliert das Toluol ab. Nach dem Umkristallisieren in Cyclohexan erhält man 115 g des Produktes mit einem Schmelzpunkt von 116°C.

2. Herstellung und Prüfung eines aromatischen Polyesters

Zu einer Lösung von 45,6 g (0,2 Mol) Bisphenol A und 16,5 g (0,412 Mol) Natriumhydroxid in 912 g destilliertem Wasser wurden 0,646 g (2 mMol) Tetra-n-butylammoniumbromid und 370 g Dichlormethan gegeben. Innerhalb von 5 Minuten wurde bei 20-25°C in diese Mischung eine Lösung von 40,6 g (0,2 Mol) einer äquimolaren Mischung von Iso- und Terephthalsäurechlorid und 2,18 g (7,9 mMol) Kettenabbrecher aus Beispiel 1 in 60 g Dichlormethan eingerührt. Man rührte bei einem pH-Wert von 12-13 noch 20 Minuten, wobei die Temperatur auf 25°C gehalten wurde. Anschließend wurde die organische Phase abgetrennt, mit 5 Gew.-%iger Phosphorsäure und mit Wasser gewaschen. Die Methylenchloridlösung wurde eingeengt und das Produkt bei 80°C 12 h im Vakuumtrockenschrank getrocknet. Das Produkt hatte eine relative Lösungsviskosität von 1,196 (gemessen in 5 g/l in $CH_2Cl_2$ bis 25°C).

Das Produkt wurde als 8 %ige Lösung in Methylenchlorid mit einer UV-Lampe (Typ: Philips HPK 125 W) acht Stunden lang bestrahlt. Danach hatte die Probe eine relative Lösungsviskosität von 1,250 (wie vorstehend gemessen).

3. Herstellung und Prüfung eines aromatischen Polyesters

Das Beispiel 2 wird mit 2,07 g (7,5 mMol) Kettenabbrecher aus Beispiel 1 wiederholt. Man erhält einen aromatischen Polyester mit einer relativen Lösungsviskotität von 1,248. Das Produkt wurde wie in Beispiel 2 bestrahlt und hatte dann eine rel. Lösungsviskosität von 1,323. (Gemessen in beiden Fällen wie in Beispiel 2).

4. Herstellung von

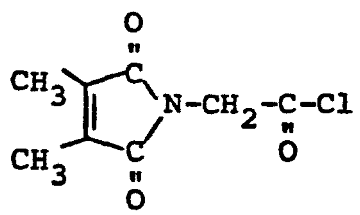

Ausgehend von 54 g (0,72 Mol) Glycin und 91 g (0,72 Mol) Dimethylmaleinsäureanhydrid und 600 ml Eisessig wurde, wie in Beispiel 1 beschrieben, vorgegangen. Ausbeute 98 g (75 % der Theorie) weiße Kristalle.

Die Umsetzung mit Thionylchlorid erfolgte ebenfalls gemäß Beispiel 1. Durch Destillieren des Rohprodukts wurden 90 g (66 % d.Th.) einer orangen Flüssigkeit erhalten (Siedepunkt bei 0,6 mbar 90,5-92°C).

5. In einem Kolben mit Rührer, Thermometer, Tropftrichter, Destillationsbrücke und Stickstoffzuleitung werden unter Stickstoff 100 g (0,79 Mol) Dimethylmaleinsäureanhydrid in 400 g Toluol und 5 g Essigsäure gelöst und auf 100°C aufgeheizt. In diese Lösung werden 48,3 g (0,79 Mol) Ethanolamin in 192 g Methanol zugetropft und das Methanol gleichzeitig abdestilliert. Anschließend wird das Toluol abdestilliert und das Produkt im Vakuum fraktioniert.

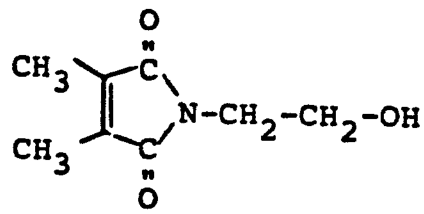

Siedepunkt bei 0,5 Torr 123°C, Auswaage 119 g (90 % der Theorie), schwach gelbes Öl. (Siehe DE-OS 2 934 578).

6. Herstellung von

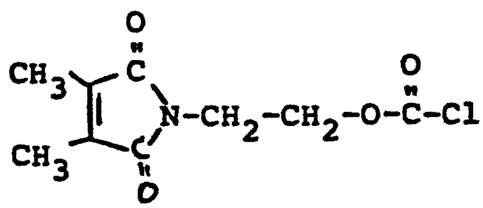

Im Dreihalskolben mit Rührer, Thermometer, Rückflußkühler und Stickstoffzuleitung, Tropftrichter und Phosgeneinleitungsrohr wurden bei -10°C in 600 ml Methylenchlorid 32 g (0,4 Mol) Pyridin vorgelegt und 19 g (0,19 Mol) Phosgen eingeleitet.

In diese Lösung wurden 10,5 g (0,06 Mol) des gelben Öls von

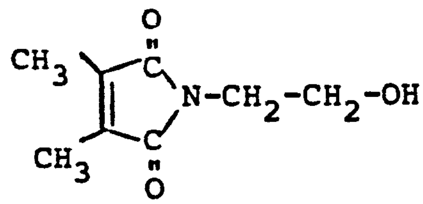

Beispiel 5, gelöst in 100 ml Methylenchlorid, zugetropft und 1 Stunde bei 20° reagieren lassen.

Die erhaltene Lösung des Chlorkohlensäureesters ist für die erfindungsgemäße Polyesterherstellung nach dem Pyridinverfahren einsetzbar.

7. Herstellung von

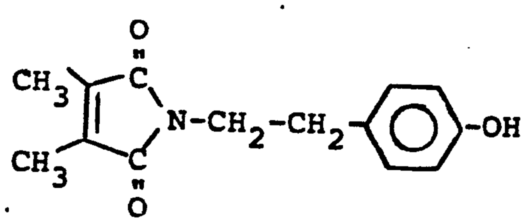

Ausgehend von 24,7 g (0,18 Mol) Tyramin, 22,7 g (0,18 Mol) Dimethylmaleinsäureanhydrid und 200 g Eisessig wird, wie in Beispiel 1 beschrieben, vorgegangen. Man erhält 16 g weiße Kristalle des Produktes mit einem Schmelzpunkt von 139-140°C. Ausbeute 36 %.

Patentansprüche

1. Verfahren zur Herstellung von aromatischen Polyestern mit Dimethylmaleinimid-Endgruppen mit mittleren Molekulargewichten $\bar{M}w$ (Gewichtsmittel, ermittelt durch Lichtstreuung) zwischen 3000 und 150 000, gegebenenfalls im Gemisch mit bekannten aromatischen Polyestern mit $\bar{M}w$ (Gewichtsmittel) zwischen 3000 und 150 000, aus Diphenolen, 0,5 bis 40 Mol-%, bezogen auf Mole Diphenole, Kettenabbrechern, Terephthalsäuredichloriden, Isophthalsäuredichloriden, wobei das Verhältnis der aromatischen Säurechloride zwischen 7:3 und 3:7 liegt, und gegebenenfalls Phosgen in Mengen bis maximal etwa 100 Mol-%, bezogen auf Mole der eingesetzten aromatischen Disäurechloride, nach den bekannten Methoden des Phasengrenzflächenverfahrens oder des Verfahrens in homogener Lösung, das dadurch gekennzeichnet ist, daß man Kettenabbrecher der Formel (I)

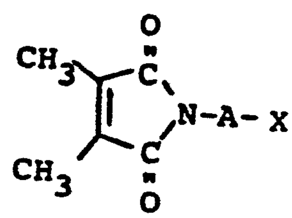

(I),

gegebenenfalls in Kombination mit maximal 3-fachen Molmengen an anderen, bekannten Kettenabbrechern verwendet, worin

X-A- X-$C_1$-$C_8$-Alkyl, X-$C_5$-$C_6$-Cylcloalkyl, X-$C_7$-$C_{28}$-Aralkyl oder ein Rest der Formel

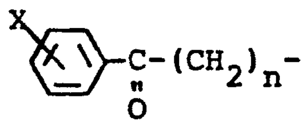 ist, worin "n" eine ganze Zahl von 1 bis 8 ist, und

X- eine funktionelle Gruppe ist, die bei der Polycarbonatherstellung nach dem Zweiphasengrenzflächenverfahren oder nach dem Verfahren in homogener Phase als reaktiver Teil des Kettenabbrechers der Formel (I) fungiert.

2. Verfahren gemäß Anspruch 1, dadurch gekennzeichnet, daß maximal die gleiche Molmenge an anderen, bekannten Kettenabbrechern verwendet wird wie von Kettenabbrechern der Formel (I).

3. Verfahren gemäß Ansprüchen 1 und 2, dadurch gekennzeichnet, daß

X- $Cl-\overset{O}{\overset{\|}{C}}-$, $Br-\overset{O}{\overset{\|}{C}}-$, $HO-\overset{O}{\overset{\|}{C}}-$, $Cl-\overset{O}{\overset{\|}{C}}-O-$, $Br-\overset{O}{\overset{\|}{C}}-O-$ oder HO- ist.

4. Aromatische Polyester mit Endgruppen der Formel (Ib)

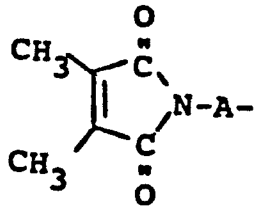

(Ib)

worin

-A- die für Formel (I) genannte Bedeutung hat, gegebenenfalls im Gemisch mit bekannten aromatischen Polyestern mit $\bar{M}w$ zwischen 3000 und 150 000 ($\bar{M}w$ ermittelt durch Lichtstreuung), die aus dem Kettenabbruch mit den anderen, bekannten Kettenabbrechern resultieren, erhältlich gemäß Verfahren der Ansprüche 1 bis 3.

5. Aromatische Polyester mit mittleren Molekulargewichten $\bar{M}w$ (Gewichtsmittel, ermittelt durch Lichtstreuung) zwischen 3000 und 150 000 der Formel (II)

$$E - \left[ O\text{-}Z\text{-}O\text{-}D \right]_p - O\text{-}Z\text{-}O - E' \quad \text{(II)},$$

worin -O-Z-O- ein Diphenolatrest mit vorzugsweise 6 bis 30 C-Atomen ist,

-D- 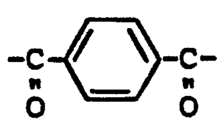 , 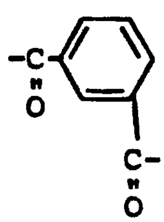 oder 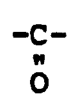 ist,

wobei bis maximal 50 % der Reste -D- 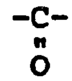 Reste sein können, und wobei das Verhältnis von 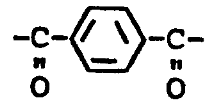 Resten zu 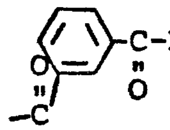-Resten zwischen 3:7 und 7:3 liegt, E und E' gleich oder verschieden sind, und wobei mindestens einer der Reste E- oder E'- einem Rest der Formel (Ic)

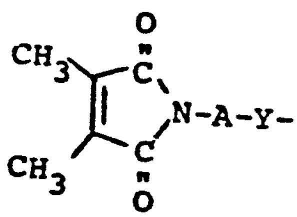 (Ic)

entspricht, worin

-A- die für Formel (I) genannte Bedeutung hat und

-Y- das Bindeglied ist, das aus der Reaktion der Kettenabbrecher der Formel (I), gegebenenfalls unter Einbeziehung eines der aromatischen Disäurechloride oder von Phosgen resultiert, und wobei die übrigen Endgruppen E und E' aus der Reaktion mit den anderen, bekannten Kettenabbrechern, gegebenenfalls unter Einbeziehung eines der aromatischen Disäurechloride oder von Phosgen resultieren, und wobei "p" der Polymerisationsgrad ist, der aus den Molekulargewichten $\bar{M}w$ von 3000 bis 150 000 resultiert.

6. Polyester gemäß Anspruch 5, dadurch gekennzeichnet, daß -Y- in Formel (Ic)

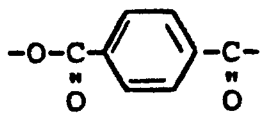, 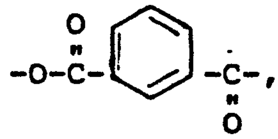, 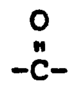 oder

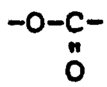 ist.

7. Verfahren zur Modifizierung der Polyester der Ansprüche 4 bis 6, dadurch gekennzeichnet, daß man diese mit ultraviolettem bzw. sichtbarem Licht bestrahlt.

8. Verfahren zur Modifizierung der Polyester gemäß Anspruch 7, dadurch gekennzeichnet, daß diese UV-Absorber enthalten.

9. Verfahren gemäß Ansprüchen 7 und 8, dadurch gekennzeichnet, daß die Polyester der natürlichen Bewitterung durch Sonnenlicht ausgesetzt werden.